# EUROPEAN PATENT APPLICATION

(11) **EP 4 365 336 A1**
(43) Date of publication of application: **08.05.2024**
(21) Application number: 22833214.4
(22) Date of filing: 29.06.2022
(51) Int. Cl.: C25B 9/23, C25B 1/04, C25B 9/00, C25B 13/08

(54) **SOLID POLYMER-TYPE WATER ELECTROLYSIS MEMBRANE-ELECTRODE JOINT BODY AND WATER ELECTROLYSIS DEVICE**

(30) Priority: 29.06.2021 JP 2021107925
(71) Applicant: AGC INC., Chiyoda-ku, Tokyo 1008405 (JP)
(72) Inventor: OKUYAMA, Takumi, Tokyo 100-8405 (JP)
(74) Representative: Müller-Boré & Partner Patentanwälte PartG mbB
(86) International application number: PCT/JP2022/025979
(87) International publication number: WO 2023/277068

(57) **Abstract**

Provided are a membrane electrode assembly for polymer electrolyte membrane water electrolysis and a water electrolyzer which can achieve a low electrolysis voltage with low hydrogen crossover. The membrane electrode assembly for polymer electrolyte membrane water electrolysis of the present invention comprises a polymer electrolyte membrane, an anode having a catalyst layer provided on one side of the polymer electrolyte membrane, a cathode having a catalyst layer provided on the other side of the polymer electrolyte membrane, and the polymer electrolyte membrane comprises a fluorinated polymer having ion exchange groups and an ion exchange capacity of from 1.25 to 2.00 meq/g dry resin and a platinum-containing substance.

## Description

### TECHNICAL FIELD

The present invention relates to a membrane electrode assembly for polymer electrolyte membrane water electrolysis and a water electrolyzer.

### BACKGROUND ART

In the so-called power-to-gas technology for storing surplus electricity for later use by converting it into a gas, use of polymer electrolyte membrane water electrolyzers (PEM water electrolyzers) has been explored.

For example, Patent Document 1 discloses a polymer electrolyte water electrolyzer having a membrane electrode assembly comprising an anode and a cathode each having a catalyst layer and a polymer electrolyte membrane sandwiched between the anode and the cathode.

### PRIOR ART DOCUMENTS

### PATENT DOCUMENTS

Patent Document 1: WO2020/162511

### DISCLOSURE OF INVENTION

### TECHNICAL PROBLEM

Recent years have seen a demand for water electrolyzers with higher performance, specifically speaking, water electrolyzers which enable low voltage electrolysis with low hydrogen crossover. Hydrogen crossover means permeation of hydrogen gas generated at the cathode of a water electrolyzer through the polymer electrolyte membrane to the anode side. Hydrogen crossover is problematic because if hydrogen gas permeates to the anode side, it forms an explosive gas mixture with oxygen on the anode side.

The present inventors assessed a water electrolyzer comprising the membrane electrode assembly disclosed in Patent Document 1 and found that it can operate at a low electrolysis voltage but needs improvement in hydrogen crossover rate.

In view of the above-mentioned circumstances, the present invention aims to provide a membrane electrode assembly for polymer electrolyte membrane water electrolysis and a water electrolyzer which can achieve a low electrolysis voltage with low hydrogen crossover.

### SOLUTION TO PROBLEM

As a result of their extensive studies on the above-mentioned problem, the present inventors have found that a membrane electrode assembly for polymer electrolyte membrane water electrolysis which comprises an anode and a cathode each having a catalyst layer and a polymer electrolyte membrane sandwiched between the anode and the cathode can produce the desired effects when the polymer electrolyte membrane comprises a fluorinated polymer having ion exchange groups and an ion exchange capacity of from 1.25 to 2.00 meq/g dry resin and a platinum-containing substance and have accomplished the present invention.

Namely, the present inventors have found the following solutions to the above-mentioned problem.
[1] A membrane electrode assembly for polymer electrolyte membrane water electrolysis which comprises a polymer electrolyte membrane, an anode having a catalyst layer provided on one side of the polymer electrolyte membrane, a cathode having a catalyst layer provided on the other side of the polymer electrolyte membrane, wherein the polymer electrolyte membrane comprises a fluorinated polymer having ion exchange groups and an ion exchange capacity of from 1.25 to 2.00 meq/g dry resin and a platinum-containing substance.
[2] The membrane electrode assembly for polymer electrolyte membrane water electrolysis according to [1], wherein the platinum-containing substance in the polymer electrolyte membrane is present only within a distance of 20% of the thickness of the polymer electrolyte membrane from the anode side of the polymer electrolyte membrane.
[3] The membrane electrode assembly for polymer electrolyte membrane water electrolysis according to [2], wherein the content of platinum atoms measured by X ray fluorescence spectrometry from the anode side of the polymer electrolyte membrane is from 0.005 to 0.050 mg/cm².
[4] The membrane electrode assembly for polymer electrolyte membrane water electrolysis according to any one of [1] to [3], wherein the platinum-containing substance is supported on a support.
[5] The membrane electrode assembly for polymer electrolyte membrane water electrolysis according to any one of [1] to [4], wherein the polymer electrolyte membrane further comprises a reinforcing material.
[6] The membrane electrode assembly for polymer electrolyte membrane water electrolysis according to any one of [1] to [5], wherein the fluorinated polymer comprises at least one species of units selected from the group consisting of units represented by the after-mentioned formula (1-3) and units represented by the after-mentioned formula (1-4):
   wherein in the formula (1-3) and the formula (1-4), R^{f1} is a perfluoroalkylene group which may have an oxygen atom between carbon atoms, R^{f2} is a single bond or a perfluoroalkylene group which may have an oxygen atom between carbon atoms, R^{f3} is a single bond or a perfluoroalkylene group which may have an oxygen atom between carbon atoms, r is 0 or 1, m is 0 or 1, and M is a hydrogen atom, an alkali metal or a quaternary ammonium cation.
[7] The membrane electrode assembly for polymer electrolyte membrane water electrolysis according to any one of [1] to [6], wherein the polymer electrolyte membrane has a multilayer structure comprising two or more electrolyte layers, and at least one of the electrolyte layers comprises the fluorinated polymer and the platinum-containing substance.
[8] The membrane electrode assembly for polymer electrolyte membrane water electrolysis according to [7], wherein all the electrolyte layers comprise the platinum-containing substance, and the content of the platinum-containing substance in an electrolyte layer close to the anode is higher than the platinum-containing substance in another electrolyte layer close to the cathode.
[9] The membrane electrode assembly for polymer electrolyte membrane water electrolysis according to [7] or [8], wherein the electrolyte layers have different ion exchange capacities.
[10] The membrane electrode assembly for polymer electrolyte membrane water electrolysis according to [7] or [9], wherein the electrolyte layers comprise an electrolyte layer which does not comprise the platinum-containing substance and an electrolyte layer which comprises the platinum-containing substance, and the ratio of the thickness of the electrolyte layer which comprises the platinum-containing substance to the thickness of the electrolyte layer which does not comprise the platinum-containing substance is at least 0.02 and at most 0.50.
[11] The membrane electrode assembly for polymer electrolyte membrane water electrolysis according to any one of [1] to [10], wherein the polymer electrolyte membrane has a thickness of at least 30 µm and at most 400 µm.
[12] The membrane electrode assembly for polymer electrolyte membrane water electrolysis according to any one of [1] to [11], wherein the mass ratio of the platinum-containing substance to the fluorinated polymer in the polymer electrolyte membrane is at least 0.005 and at most 0.030.
[13] A water electrolyzer comprising the membrane electrode assembly for polymer electrolyte membrane water electrolysis as defined in any one of [1] to [12].

### ADVANTAGEOUS EFFECTS OF INVENTION

According to the present invention, it is possible to provide a membrane electrode assembly for polymer electrolyte membrane water electrolysis and a water electrolyzer which can achieve a low electrolysis voltage with low hydrogen crossover.

### BRIEF DESCRIPTION OF DRAWINGS

[Fig. 1] A schematic cross-sectional view of an embodiment of the membrane electrode assembly for polymer electrolyte membrane water electrolysis of the present invention.
[Fig. 2] A schematic cross-sectional view of another embodiment of the membrane electrode assembly for polymer electrolyte membrane water electrolysis of the present invention.
[Fig. 3] A partial enlarged view of the membrane electrode assembly shown in Fig. 2.

### DESCRIPTION OF EMBODIMENTS

The following definitions of terms apply throughout the specification and claims unless otherwise noted.

An "ion exchange group" is a group containing at least one ion which can be exchanged with a different ion, such as a sulfonic acid functional group and a carboxylic acid functional group, which will be mentioned below.

A "sulfonic acid functional group" means a sulfonic acid group (-SO₃H) or a sulfonate group (-SO₃M², where M² is an alkali metal or a quaternary ammonium cation).

A "carboxylic acid functional group" means a carboxylic acid group (-COOH) or a carboxylate group (-COOM¹, where M¹ is an alkali metal or a quaternary ammonium cation).

A "precursor membrane" is a membrane comprising a polymer having groups convertible to ion exchange groups.

A "group convertible to an ion exchange group" means a group which can be converted to an ion exchange group by treatments such as hydrolysis and conversion to an acid form.

A "group convertible to a sulfonic acid functional group" means a group which can be converted to a sulfonic acid functional group by treatments such as hydrolysis and conversion to an acid form.

A "unit" in a polymer mean an atomic group derived from one molecule of a monomer by polymerization. A unit may be an atomic group directly formed by a polymerization reaction, or may be an atomic group having a partially different structure obtained by polymerization followed by partial modification.

A numerical range expressed by using "to" includes the figures before and after "to" as the lower limit and the upper limit. In a series of numerical ranges mentioned herein, the upper limit or lower limit of a numerical range may be replaced by the upper limit or lower limit of another numerical range in the same series. The upper limit or lower limit of any numerical range herein may be replaced by a figure in the Examples.

### [Membrane Electrode Assembly]

The membrane electrode assembly for polymer electrolyte membrane water electrolysis (hereinafter referred to simply as "membrane electrode assembly") comprises a polymer electrolyte membrane (hereinafter referred to simply as "electrolyte membrane") comprising a fluorinated polymer having ion exchange groups and an ion exchange capacity of from 1.25 to 2.00 meq/g dry resin and a platinum-containing substance, an anode having a catalyst layer provided on one side of the polymer electrolyte membrane, a cathode having a catalyst layer provided on the other side of the polymer electrolyte membrane.

The membrane electrode assembly of the present invention can achieve a low electrolysis voltage with low hydrogen crossover, when applied to a water electrolyzer, presumably, though not for sure, for the following reason.

It is speculated that the platinum-containing substance in the electrolyte membrane suppress permeation of hydrogen generated on the cathode side to the anode side (hydrogen crossover) because on the platinum-containing substance, hydrogen produced on the cathode side catalytically reacts with oxygen generated on the anode side to form water.

The electrolyte membrane in the present invention can achieve a low electrolysis voltage owing to inclusion of a fluorinated polymer having a high ion exchange capacity.

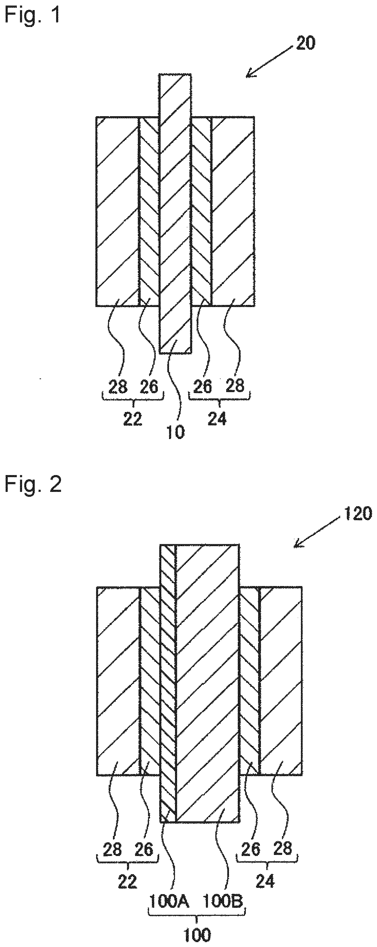

Fig. 1 is a schematic cross-sectional view of an embodiment of the membrane electrode assembly of the present invention in which the electrolyte membrane has a monolayer structure. In the embodiment shown in Fig. 1, the membrane electrode assembly 20 comprises an anode 22 having a catalyst layer 26 and a gas diffusion layer 28, a cathode 24 having a catalyst layer 26 and a gas diffusion layer 28, and an electrolyte membrane 10 between the anode 22 and the cathode 24 in contact with the catalyst layers 26.

The electrolyte membrane may a multilayer membrane, although the electrolyte membrane in Fig. 1 has a monolayer membrane.

Specific embodiments of such a multilayer electrolyte membrane include a laminate of two or more electrolyte layers containing at least one layer comprising a fluorinated polymer (I) and a platinum-containing substance, as well as a laminate of two or more electrolyte layers containing two or more electrolyte layers comprising different amounts of a platinum-containing substance and a laminate of two or more electrolyte layers having different ion exchange capacities.

Among them, a laminate of two or more electrolyte layers comprising different amounts of a platinum-containing substance is preferred to enhance the effect of the present invention, and it is more preferred that the content of the platinum-containing substance is higher in an electrolyte layer close to the anode than in an electrolyte layer close to the cathode. The electrolyte layer close to the anode is not necessarily restricted to an electrolyte layer in contact with the anode, and may be separated from the anode by another electrolyte layer. The same applies to the electrolyte layer close to the cathode.

Fig. 2 is a schematic cross-sectional view of another embodiment of the membrane electrode assembly of the present invention having a multilayer electrolyte membrane. The membrane electrode assembly 120 shown in Fig. 2 has the same structure as the membrane electrode assembly 20 shown in Fig. 1 except that the it has an electrolyte membrane 100 instead of the electrolyte membrane 10 in Fig. 1. In the electrolyte membrane 100 in Fig. 2, a first electrolyte membrane 100A and a second electrolyte membrane 100B are arranged in this order from the anode 22 to the cathode 24.

The electrolyte membrane may have three or more layers, although the electrolyte membrane in Fig. 2 has only two layers.

The platinum-containing substance in the electrolyte membrane is preferably present only within the distance of 20% of the thickness of the electrolyte membrane from the anode side of the electrolyte membrane in view of low hydrogen crossover. Especially, it is preferred that the platinum-containing substance in the electrolyte membrane is present only within a distance of 18% of the thickness of the electrolyte membrane from the anode side of the electrolyte membrane, and it is more preferred that the platinum-containing substance in the electrolyte membrane is present only within a distance of 10% of the thickness of the electrolyte membrane from the anode side of the electrolyte membrane, presumably, though not for sure, for the following reason.

In a working water electrolyzer, hydrogen generated on the cathode side diffuses to the anode side, and the hydrogen concentration is lower at the interface between the anode and the electrolyte membrane far from the hydrogen generation site than at the interface between the cathode and the electrolyte membrane close to the hydrogen generation site. Therefore, it is presumed that hydrogen is decomposed or adsorbed by the platinum-containing substance more effectively near the interface between the anode and the electrolyte membrane with low hydrogen concentration than near the interface between the cathode and the electrolyte membrane with high hydrogen concentration.

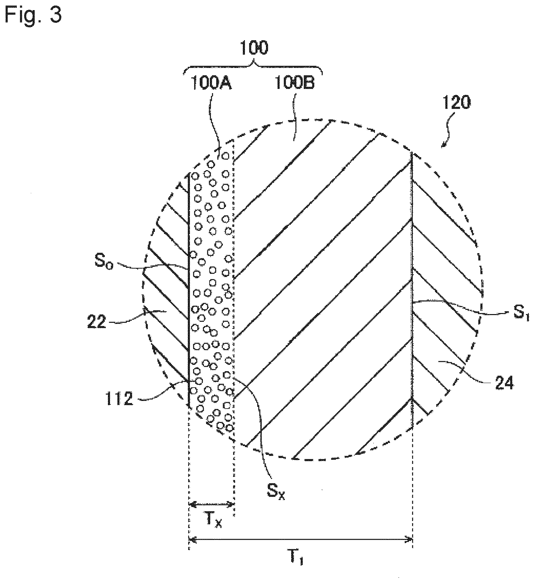

An electrolyte membrane comprising a platinum-containing substance only within a distance of X% of the thickness of the electrolyte membrane from the anode side of the electrolyte membrane is explained below in reference to Fig. 3.

Fig. 3 is an enlarged view of the membrane electrode assembly shown in Fig. 2. In Fig. 3, the first electrolyte layer 100A comprises particles of the platinum-containing substance 112, while the second electrolyte layer 100B does not comprise the platinum-containing substance 112.

The thickness of the electrolyte membrane 100 is defined as the minimum distance T₁ between one surface S₀ of the electrolyte membrane 100 and the other surface S₁ of the electrolyte membrane 100.

The platinum-containing substance 112 dispersed in the first electrolyte layer 100A is present between the surface S₀ and the surface Sₓ on the cathode side of the first electrolyte layer 100A. The minimum distance Tₓ between the surface S₀ and the surface Sₓ corresponds to X% of the distance T₁. Thus, it follows that when the distance Tₓ corresponds to 20% of the distance T₁, the surface Sₓ is at a distance of 20% of the entire thickness (equivalent to the distance T₁) of the electrolyte membrane 100 from the surface S₀ of the electrolyte membrane 100.

It is possible to detect where the platinum-containing substance is present in the electrolyte membrane, using a magnified cross-sectional image of a membrane electrode assembly along the thickness direction, for example, taken by a scanning electron microscope (model "SU8230", manufactured by Hitachi High-Technologies Corporation), if necessary, with an elemental distribution measured by an energy-dispersive X ray spectrometer (model "QUANTAX FlatQUAD", manufactured by Bruker). The distance Tₓ shown in Fig.3 can be calculated from the location of the platinum-containing substance in the magnified image.

In order to make sure that the platinum-containing substance is present only within a distance of 20% of the entire thickness of the electrolyte membrane from the anode side of the electrolyte membrane, for example, an electrolyte membrane comprising an electrolyte layer containing a platinum-containing substance and an electrolyte layer containing no platinum-containing substance, as shown in Fig. 3, may be used.

Alternatively, an electrolyte membrane containing no platinum-containing substance may be impregnated with a solution containing a platinum-containing substance from the anode side of the electrolyte membrane so that the platinum-containing substance penetrates to a distance of 20% of the entire thickness of the electrolyte membrane from the anode side.

When a platinum-containing substance is present only within a distance of 20% of the entire thickness of the electrolyte membrane from the anode side of the electrolyte membrane, the content of platinum atoms as measured by X-ray fluorescence spectrometry (XRF) is preferably at most 0.050 mg/cm², more preferably at most 0.04 mg/cm², further preferably at most 0.03 mg/cm², and preferably at least 0.005 mg/cm², more preferably at least 0.008 mg/cm², further preferably at least 0.010 mg/cm². When the content of platinum atoms is at most 0.050 mg/cm², the membrane electrode assembly can provide a water electrolyzer which operates at a lower electrolysis voltage and at a lower cost. When it is at least 0.005 mg/cm², hydrogen crossover can be suppressed.

Determination of the content of platinum atoms by XRF will be described in detail later in the Examples.

### <Electrolyte Membrane>

The electrolyte membrane comprises a fluorinated polymer (I) and a platinum-containing substance.

The thickness of the electrolyte membrane is preferably at least 30 µm and at most 400 µm, more preferably at least 300 µm, further preferably at most 200 µm. When the electrolyte membrane has a multilayer structure, the thickness of the electrolyte membrane is the sum of the thicknesses of the respective electrolyte layers.

When the electrolyte membrane has a multilayer structure comprising an electrolyte layer containing a platinum-containing substance and an electrolyte layer containing no platinum-containing substance, the ratio of the thickness of the electrolyte layer containing a platinum-containing substance to the thickness of the electrolyte layer containing no platinum-containing substance (the thickness of the electrolyte layer containing a platinum-containing substance / the thickness of the electrolyte layer containing no platinum-containing substance) is preferably at least 0.02, more preferably at least 0.05, further preferably at least 0.06, and preferably at most 0.50, more preferably at most 0.20, further preferably at most 0.15.

The thickness of an electrolyte membrane (an electrolyte layer) is measured on a magnified cross-sectional image of the electrolyte membrane (for example, at an objective lens magnification of 50) taken by a laser microscope (model "VK-X1000", manufactured by KEYENCE CORPORATION).

### [Fluorinated Polymer (I)]

The fluorinated polymer (I) has an ion exchange capacity of from 1.25 to 2.00 meq/g dry resin.

The ion exchange capacity of the fluorinated polymer (I) is preferably at least 1.40 meq/g dry resin, further preferably at least 1.80 meq/g dry resin, to provide a water electrolyzer with a lower electrolysis voltage.

The ion exchange capacity of the fluorinated polymer (I) is preferably at most 1.90 meq/g dry resin, further preferably at most 1.80 meq/g dry resin, in view of the strength of the membrane electrode assembly under hydration.

The fluorinated polymer (I) may be a single species or a laminate or mixture of two or more species.

Though the electrolyte membrane may contain a polymer other than the fluorinated polymer (I), it is preferred to practically consist of the fluorinated polymer (I). Practically consist of the fluorinated polymer (I) means that the content of the fluorinated polymer (I) is at least 95 mass% of the total mass of the polymers in the polymer electrolyte membrane. The upper limit of the content of the fluorinated polymer (I) is 100 mass% relative to the total mass of the polymers in the polymer electrolyte membrane.

As specific examples of the polymers other than the fluorinated polymer (I), polyazole compounds selected from the group consisting of polymers of heterocyclic compounds containing at least one ring-constituting nitrogen atom and polymers of heterocyclic compounds containing at least one ring-constituting nitrogen atom and at least one ring-constituting oxygen and/or sulfur atom.

Specific examples of the polyazole compounds include polyimidazole compounds, polybenzimidazole compounds, polybenzobisimidazole compounds, polybenzoxazole compounds, polyoxazole compounds, polythiazole compounds, polybenzothiazole compounds and the like.

In view of the oxidation resistance of the polymer electrolyte membrane, the other polymer may be a polyphenylene sulfide resin or a polyphenylene ether resin.

The fluorinated polymer (I) has ion exchange groups. The ion exchange groups may be, for example, sulfonic acid functional groups or carboxylic acid functional groups, and are preferably sulfonic acid functional groups to attain a lower electrolysis voltage.

Hereinafter, a fluorinated polymer having sulfonic acid functional groups (hereinafter referred to also as a fluorinated polymer (S)) will be discussed mainly.

The fluorinated polymer (S) preferably comprises units based on a fluoroolefin and units based on a fluorine-containing monomer having a sulfonic acid functional group.

The fluoroolefin may, for example, be a C₂₋₃ fluoroolefin having at least one fluorine atom in the molecule. Specific examples of the fluoroolefin include tetrafluoroethylene (hereinafter referred to also as "TFE"), chlorotrifluoroethylene, vinylidene fluoride, vinyl fluoride and hexafluoropropylene. Among them, TFE is preferred in view of the production cost of the monomer, the reactivity with other monomers and the ability to give an excellent fluorinated polymer (S).

The fluoroolefin may be a single species or a combination of two or more species.

The units based on a fluorine-containing monomer having a sulfonic acid functional group are preferably units represented by the formula (1).

Formula (1) -[CF₂-CF(-L-(SO₃M)ₙ)]-

L is a (n+1)-valent perfluorinated hydrocarbon group which may contain an ethereal oxygen atom.

The ethereal oxygen atom may be located at the end of the perfluorinated hydrocarbon group or between carbon atoms.

The number of carbon atoms in the (n+1)-valent perfluorinated hydrocarbon group is preferably at least 1, more preferably at least 2 and is preferably at most 20, more preferably at most 10.

L is preferably a (n+1)-valent perfluorinated aliphatic hydrocarbon group which may contain an ethereal oxygen atom, particularlyore preferably a divalent perfluoroalkylene group which may contain an oxygen atom when n = 1 or a trivalent perfluoroalkylene group which may contain an oxygen atom when n = 2.

The divalent perfluoroalkylene group may be linear or branched.

M is a hydrogen atom, an alkali metal or a quaternary ammonium cation.

n is an integer of 1 or 2.

The units represented by the formula (1) are preferably units represented by the formula (1-1), units represented by the formula (1-2), units represented by the formula (1-3) or units represented by the formula (1-4).

Formula (1-1) -[CF₂-CF(-O-R^{f1}-SO₃M)]-

Formula (1-2) -[CF₂-CF(-R^{f1}-SO₃M)]-

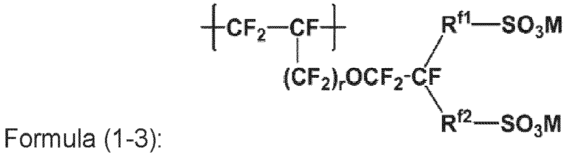

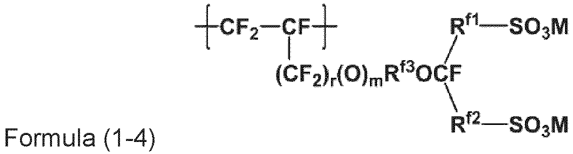

R^{f1} is a perfluoroalkylene group which may contain an oxygen atom between carbon atoms. The number of carbon atoms in the perfluoroalkylene group is preferably at least 1, more preferably at least 2, and preferably at most 20, more preferably at most 10.

R^{f2} is a single bond or a perfluoroalkylene group which may contain an oxygen atom between carbon atoms. The number of carbon atoms in the perfluoroalkylene group is preferably at least 1, more preferably at least 2, and preferably at most 20, more preferably at most 10.

R^{f3} is a single bond or a perfluoroalkylene group which may contain an oxygen atom between carbon atoms. The number of carbon atoms in the perfluoroalkylene group is preferably at least 1, more preferably at least 2, and preferably at most 20, more preferably at most 10.

r is an integer of 0 or 1.

m is an integer of 0 or 1.

M is a hydrogen atom, an alkali metal or a quaternary ammonium cation.

The units represented by the formula (1-1) and the units represented by the formula (1-2) are more preferably units represented by the formula (1-5).

Formula (1-5): -[CF₂-CF(-(CF₂)ₓ-(OCF₂CFY)_{y}-O-(CF₂)_{z}-SO₃M)]-

x is an integer of 0 or 1, y is an integer of from 0 to 2, z is an integer of from 1 to 4, and Y is F or CF₃. M is the same as defined above.

Specific examples of units represented by the formula (1-1) include the following units wherein w is an integer of from 1 to 8, x is an integer of from 1 to 5, and M is the same as defined above.

-[CF₂-CF(-O-(CF₂)_{w}-SO₃M)]-

-[CF₂-CF(-O-CF₂CF(CF₃)-O-(CF₂)_{w}-SO₃M)]-

-[CF₂-CF(-(O-CF₂CF(CF₃))ₓ-SO₃M)]-

Specific examples of units represented by the formula (1-2) include the following units wherein w is an integer of from 1 to 8, and M is the same as defined above.

-[CF₂-CF(-(CF₂)_{w}-SO₃M)]-

-[CF₂-CF(-CF₂-O-(CF₂)_{w}-SO₃M)]-

The units represented by the formula (1-3) are preferably units represented by the formula (1-3-1) wherein M is the same as defined above.

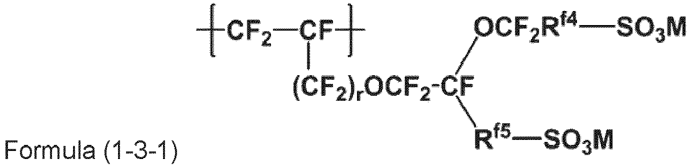

R^{f4} is a linear C₁₋₆ perfluoroalkylene group, R^{f5} is a single bond or a linear C₁₋₆ perfluoroalkylene group which may contain an oxygen atom between carbon atoms. r and M are the same as defined above.

Specific examples of the units represented by the formula (1-3-1) include the following units.

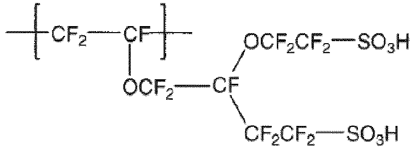

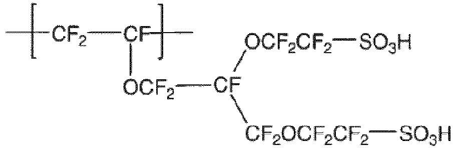

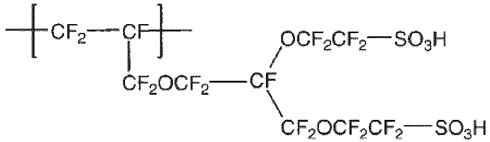

The units represented by the formula (1-4) are preferably units represented by the formula (1-4-1) wherein R^{f1}, R^{f2} and M are the same as defined above.

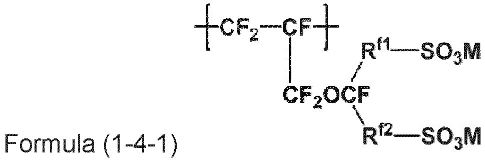

Specific examples of the units represented by the formula (1-3-1) include the following units.

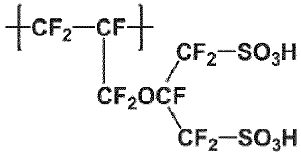

The fluorine-containing monomer having a sulfonic acid functional group may be a single species or a combination of two or more species.

The fluorinated polymer (I) may comprise units based on an additional monomer other than units based on the fluoroolefin and units based on a fluorine-containing monomer having a sulfonic acid functional group.

The additional monomer may, for example, be CF₂=CFR^{f6} (wherein R^{f6} is a C₂₋₁₀ perfluoroalkyl group), CF₂=CF-OR^{f7} (wherein R^{f7} is a C₁₋₁₀ perfluoroalkyl group) or CF₂=CFO(CF₂)ᵥCF=CF₂ (wherein v is an integer of from 1 to 3).

The content of units based on the additional monomer is preferably at most 30 mass% relative to all the units in the fluorinated polymer (I) to secure a certain level of ion exchange performance.

The content of the fluorinated polymer (I) is preferably from 95 to 100 mass% relative to the entire electrolyte membrane.

### (Platinum-Containing Substance)

The platinum-containing substance may be any substance which comprises platinum such as platinum itself, a platinum oxide, a double oxide containing platinum or a platinum alloy.

As the double oxide containing platinum, MₓPt₃O₄ (wherein M is at least one metal atom selected from the group consisting of Li, Na, Mg, Ca, Zn, Cd, Co, Ni, Mn, Cu, Ag, Bi and Ce, and x is larger than 0 and not larger than 1) may be mentioned specifically.

The platinum alloy may, for example, be an alloy containing platinum and at least one metal selected from the group consisting of transition metals and noble metals other than platinum.

Regarding the shape of the platinum-containing substance, it may be in the form of particles or sheet. When the platinum-containing substance is in the form of particles, it may be core-shell particles.

When the platinum-containing substance is in the form of particles, the average particle size (D50) of the platinum-containing substance is preferably at least 1 nm, more preferably at least 10 nm, further preferably at least 100 nm, and is preferably at most 10000 nm, more preferably at most 5000 nm, further preferably at most 3000 nm.

The average particle size of the platinum-containing substance is defined as the volume based cumulative 50% diameter (D50) measured with a particle size distribution analyzer using a dispersion of the platinum-containing substance after grinding under the measurement conditions described in the Examples.

In the case of a monolayer electrolyte membrane, the mass of the platinum-containing substance in the electrolyte membrane per 1 cm² is preferably at least 0.010 mg/cm², more preferably at least 0.030 mg/cm², further preferably at least 0.040 mg/cm² and is preferably at most 0.050 mg/cm². When the mass of the platinum-containing substance per 1 cm² of the electrolyte membrane is at least 0.030 mg/cm², hydrogen crossover can be suppressed. When the mass of the platinum-containing substance per 1 cm² of the electrolyte membrane is at most 0.050 mg/cm², the membrane electrode assembly can provide a water electrolyzer which operates at a lower electrolysis voltage and at a lower cost.

In the case of a multilayer electrolyte membrane, the electrolyte membrane preferably comprises at least one electrolyte layer in which the mass of the platinum-containing substance per 1 cm² is at least 0.005 mg/cm², more preferably at least 0.008 mg/cm², further preferably at least 0.010 mg/cm² and is preferably at most 0.050 mg/cm², more preferably at most 0.040 mg/cm². When the mass of the platinum-containing substance per 1 cm² of the electrolyte layer is at least 0.005 mg/cm², hydrogen crossover can be suppressed. When the mass of the platinum-containing substance per 1 cm² of the electrolyte layer is at most 0.050 mg/cm², the membrane electrode assembly can provide a water electrolyzer which operates at a lower electrolysis voltage and at a lower cost.

In the case of a monolayer electrolyte membrane, the mass ratio of the platinum-containing substance to the fluorinated polymer (I) in the electrolyte membrane (the mass of the platinum-containing substance / the mass of the fluorinated polymer (I)) is preferably from 0.001 to 0.003. When the mass ratio is at least 0.001, hydrogen crossover can be suppressed. When the mass ratio is at most 0.003, the membrane electrode assembly can provide a water electrolyzer which operates at a lower electrolysis voltage and at a lower cost.

In the case of a multilayer electrolyte membrane, the electrolyte membrane preferably comprises at least one electrolyte layer in which the mass ratio of the platinum-containing substance to the fluorinated polymer (I) (the mass of the platinum-containing substance / the mass of the fluorinated polymer (I)) is at least 0.005, more preferably at least 0.010 and at most 0.030. When the mass ratio is at least 0.005, hydrogen crossover can be suppressed. When the mass ratio is at most 0.030, the membrane electrode assembly can provide a water electrolyzer which operates at a lower electrolysis voltage and at a lower cost.

The platinum-containing substance may be supported on a support. The support may, for example, be a carbon support such as carbon black powder, graphitized carbon, carbon fibers or carbon nanotubes.

When the platinum-containing substance is supported on a support, the amount of the platinum-containing substance on the support is preferably at least 10 mass%, more preferably at least 20 mass%, further preferably at least 30 mass%, and at most 50 mass%, relative to the total mass of the platinum-containing substance and the support.

### (Reinforcing Material)

The polymer electrolyte membrane may further comprise a reinforcing material to improve the strength of the electrolyte membrane.

The reinforcing material may, for example, be a porous body, fibers, a woven fabric or a non-woven fabric.

The reinforcing material is preferably made of a material selected from the group consisting of polytetrafluoroethylene (hereinafter referred to also as "PTFE"), a tetrafluoroethylene-perfluoro(alkyl vinyl ether) copolymer (hereinafter referred to also as "PFA"), polyether ether ketone (hereinafter referred to also as "PEEK") and polyphenylene sulfide (hereinafter referred to also as "PPS").

The amount of the electrolyte membrane, if any, in the electrolyte membrane is preferably at least 3 mass%, more preferably at least 5 mass%, and preferably at most 50 mass%, more preferably at most 40 mass%, further preferably at most 30 mass%, relative to the total mass of the electrolyte membrane.

### (Production of Electrolyte Membrane)

A monolayer electrolyte membrane may be produced, for example, as follows. First, the ion exchange groups in a fluorinated polymer (hereinafter referred to also as a fluorinated polymer (I')) comprising a fluorinated monomer having a group convertible to an ion exchange group (hereinafter referred to also as a fluorinated monomer (I')) are converted to ion exchange groups to obtain a fluorinated polymer (I), then a dispersion of the fluorinated polymer (I) and a platinum-containing substance in a solvent is applied onto a substrate, and the solvent is removed to obtain a monolayer electrolyte membrane (containing the platinum-containing substance). It is possible to produce an electrolyte membrane comprising a reinforcing material by impregnating a reinforcing material with the dispersion, instead of applying the dispersion onto a substrate.

The solvent may, for example, be water or an organic solvent, although there are no particular restrictions. As the solvent, water may be used solely, and an organic solvent may be used solely, or a solvent mixture of water and an organic solvent may be used, but it is preferred to use a solvent mixture of water and an organic solvent.

A monolayer electrolyte membrane may also be produced as follows. Firstly, an electrolyte layer comprising no platinum-containing substance, and, if necessary, a reinforcing material is produced, then the electrolyte layer is impregnated with a solution containing platinum ions, and the electrolyte layer is dried to precipitate a platinum-containing substance in the electrolyte layer. Thereby, a monolayer electrolyte membrane (comprising a platinum-containing substance) is obtained.

A monolayer electrolyte membrane may also be produced by producing a membrane (hereinafter referred to also as a "precursor membrane") comprising a fluorinated polymer (I') and a platinum-containing substance, and, if necessary, a reinforcing material, and then converting the groups convertible to ion exchange groups in the precursor membrane to ion exchange groups to obtain a monolayer electrolyte membrane (an electrolyte layer comprising a platinum-containing substance).

A monolayer electrolyte membrane may also be produced as follows. Firstly, a precursor membrane comprising no platinum-containing substance and, if necessary, a reinforcing material is produced, the groups convertible to ion exchange groups in the precursor membrane are converted to ion exchange groups (to obtain an electrolyte membrane comprising no platinum-containing substance). Then, the membrane is impregnated with a solution containing platinum ions and dried to precipitate a platinum-containing substance in the membrane to obtain a monolayer electrolyte membrane (an electrolyte layer comprising a platinum-containing substance).

A multilayer electrolyte membrane may, for example, be produced by laminating the above-mentioned electrolyte layer comprising a platinum-containing substance and the above-mentioned electrolyte layer comprising no platinum-containing substance and hot-pressing the resulting laminate to obtain a multilayer electrolyte membrane. Alternatively, a dispersion of a fluorinated polymer (I) and a platinum-containing substance onto the above-mentioned electrolyte layer comprising no platinum-containing substance, and the solvent is removed to obtain a multilayer electrolyte membrane.

The fluorinated monomer (I') is preferably a polymer (hereinafter referred to also as a "fluorinated polymer (S')") of a fluorinated monomer (hereinafter referred to also as a "fluorinated monomer (S')") having a group convertible to a sulfonic acid functional group, particularly preferably a copolymer of a fluoroolefin and a fluorine-containing monomer having a group convertible to a sulfonic acid functional group.

Next, the fluorinated polymer (S') will be described.

The copolymerization for production of the fluorinated polymer (S') may be carried out by any known technique such as solution polymerization, suspension polymerization or emulsion polymerization.

The fluoroolefin may be any of those mentioned previously and is preferably TFE in view of the production cost of the monomer, the reactivity with other monomers and the ability to give an excellent fluorinated polymer (S).

The fluoroolefin may be a single species or a combination of two or more species.

The fluorinated monomer (S') may be a compound having at least one fluorine atom in the molecule, and having an ethylenic double bond and a group convertible to a sulfonic functional group.

The fluorinated monomer (S') is preferably a compound represented by the formula (2) in view of the production cost of the monomer, the reactivity with other monomers and the ability to give an excellent fluorinated polymer (S).

Formula (2): CF₂=CF-L-(A)ₙ

L and n in the formula (2) are the same as defined above.

A is a group convertible to a sulfonic acid functional group. The group convertible to a sulfonic acid functional group is preferably a functional group convertible to a sulfonic acid functional group by hydrolysis. Specific examples of the group convertible to a sulfonic acid functional group include -SO₂F,-SO₂Cl and -SO₂Br. When there are two or more A's, they may be identical to or different from one another.

The compound represented by the formula (2) is preferably a compound represented by the formula (2-1), a compound represented by the formula (2-2), a compound represented by the formula (2-3) or a compound represented by the formula (2-4).

Formula (2-1): CF₂=CF-O-R^{f1}-A

Formula (2-2): CF₂=CF-R^{f1}-A

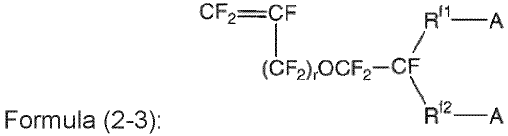

R^{f1}, R^{f2}, r and A in the formulae are the same as defined above.

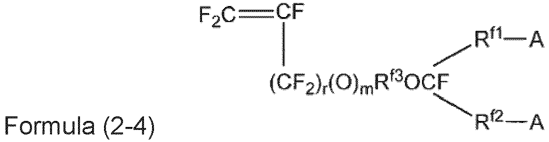

R^{f1}, R^{f2}, R^{f3}, r, m and A in the formula are the same as defined above.

The compound represented by the formula (2-1) and the compound represented by the formula (2-2) are preferably compounds represented by the formula (2-5).

Formula (2-5) CF₂=CF-(CF₂)ₓ-(OCF₂CFY)_{y}-O-(CF₂)_{z}-SO₃M

M, x, y, z and Y in the formula are the same as defined above.

Specific examples of the compound represented by the formula (2-1) include the following compounds wherein w is an integer of from 1 to 8, and x is an integer of from 1 to 5.

CF₂=CF-O-(CF₂)_{w}-SO₂F

CF₂=CF-O-CF₂CF(CF₃)-O-(CF₂)_{w}-SO₂F

CF₂=CF-[O-CF₂CF(CF₃)]ₓ-SO₂F

Specific examples of the compound represented by the formula (2-2) include the following compounds wherein w is an integer of from 1 to 8.

CF₂=CF-(CF₂)_{w}-SO₂F

CF₂=CF-CF₂-O-(CF₂)_{w}-SO₂F

The compound represented by the formula (2-3) is preferably a compound represented by the formula (2-3-1).

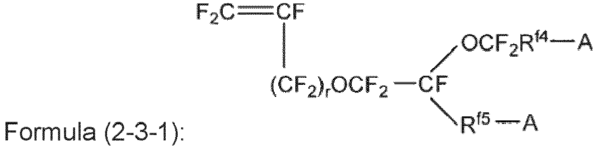

R^{f3}, R^{f4}, r and A in the formula are the same as defined above.

Specific examples of the compound represented by the formula (2-3-1) include the following compounds.

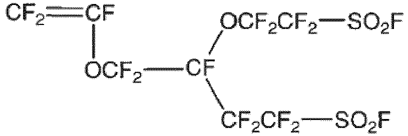

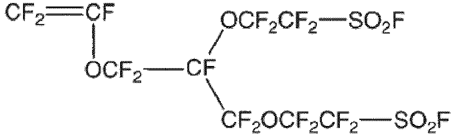

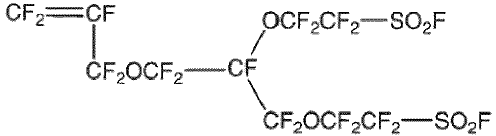

The compound represented by the formula (2-4) is preferably a compound represented by the formula (2-4-1).

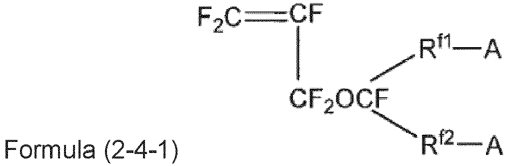

R^{f1}, R^{f2} and A in the formulae are the same as defined above.

Specific examples of the compound represented by the formula (2-4-1) include the following compound.

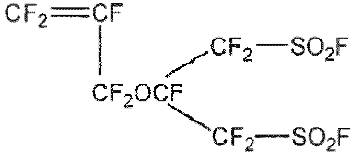

The fluorinated monomer (S') may be a single species or a combination of two or more species.

For production of the fluorinated polymer (S'), in addition to the fluoroolefin and the fluorinated monomer (S'), an additional monomer may be used. The additional monomer may be any of those mentioned previously.

The ion exchange capacity of the fluorinated monomer (I') can be adjusted by changing the content of groups convertible to ion exchange groups in the fluorinated monomer (I').

The precursor membrane may be formed, for example, by extrusion.

When the precursor membrane comprises a reinforcing material, the precursor membrane may be formed by forming membranes (I') comprising a fluorinated polymer (I') and, if necessary, a platinum-containing substance, and then laminating a membrane (I'), a reinforcing material and a membrane (I') in this order by laminating rolls or by a vacuum lamination apparatus.

The conversion of groups convertible to ion exchange groups in the precursor membrane to ion exchange groups may be carried out, for example, by hydrolyzing the precursor membrane or converting the precursor membrane to the acid form.

In particular, it is preferred to contact the precursor membrane with an aqueous alkaline solution.

Contact of the precursor membrane with an aqueous alkaline solution may be made, for example, by immersing the precursor membrane in the aqueous alkaline solution or by spraying the aqueous alkaline solution onto the surface of the precursor membrane.

The temperature of the aqueous alkaline solution is preferably at least 30°C, more preferably at least 40°C, and preferably at most 100°C. The duration of the contact between the precursor membrane and the aqueous alkaline solution is preferably at least 3 minutes, more preferably at least 5 minutes, and at most 150 minutes, more preferably at most 50 minutes.

The aqueous alkaline solution preferably comprises an alkali metal hydroxide, a water-miscible organic solvent and water.

Specific examples of the alkali metal hydroxide are sodium hydroxide and potassium hydroxide.

Herein, the water-miscible organic solvent is an organic solvent which easily dissolves in water, and specifically, preferred is an organic solvent with a solubility of at least 0.1 g in 1,000 ml of water (20°C), and more preferred is an organic solvent with a solubility of at least 0.5 g. The water-miscible organic solvent preferably contains at least one member selected from the group consisting of aprotic organic solvents, alcohols and amino alcohols, and more preferably contains an aprotic organic solvent.

The water-miscible organic solvent may be a single species or a combination of two or more species.

Specific examples of the aprotic organic solvents include dimethyl sulfoxide, N,N-dimethylformamide, N,N-dimethylacetamide, N-methyl-2-pyrrolidone and N-ethyl-2-pyrrolidone, and dimethyl sulfoxide is preferred.

Specific examples of the alcohols include methanol, ethanol, isopropanol, butanol, methoxyethoxyethanol, butoxyethanol, butyl carbitol, hexyloxyethanol, octanol, 1-methoxy-2-propanol and ethylene glycol.

Specific examples of the amino alcohols include ethanolamine, N-methylethanolamine, N-ethylethanolamine, 1-amino-2-propanol, 1-amino-3-propanol, 2-aminoethoxyethanol, 2-aminothioethoxyethanol and 2-amino-2-methyl-1-propanol.

The concentration of the alkali metal hydroxide in the aqueous alkaline solution is preferably at least 1 mass%, more preferably at least 3 mass%, and at most 60 mass%, more preferably at most 55 mass%.

The content of the water-miscible organic solvent in the aqueous alkaline solution is preferably at least 1 mass%, more preferably at least 3 mass%, and at most 60 mass%, more preferably at most 55 mass%.

The content of water in the aqueous alkaline solution is preferably from 39 to 80 mass%.

After the contact of the precursor membrane with an aqueous alkaline solution, the aqueous alkaline solution may be removed. The aqueous alkaline solution may be removed, for example, by washing the precursor membrane which have been contacted with the aqueous alkaline solution with water.

After the contact of the precursor membrane with an aqueous alkaline solution, the resulting membrane may be brought in contact with an aqueous acidic solution to convert the ion exchange groups to the acid form.

Contact of the precursor membrane with an aqueous acidic solution may be made, for example, by immersing the precursor membrane in the aqueous acidic solution or by spraying the aqueous acidic solution onto the surface of the precursor membrane.

The aqueous acidic solution preferably comprises an acid component and water.

As the acid component in the aqueous acidic solution, sulfuric acid or hydrochloric acid may, for example, be mentioned.

### <Anode and Cathode>

The anode and the cathode each have catalyst layers. In the embodiments shown in Fig. 1 and Fig. 2, the anode 22 and the cathode 24 each have catalyst layers 26 and gas diffusion layers 28.

A catalyst layer may, for example, be a layer comprising a catalyst and a polymer having ion exchange groups.

As specific examples of the catalyst, a supported catalyst having platinum, a platinum alloy or a platinum-based core-shell catalyst supported on a carbon carrier, an iridium oxide catalyst, a double oxide catalyst comprising iridium and another metal, an iridium oxide alloy-based catalyst and an iridium oxide-based core-shell catalyst may be mentioned. As the carbon carrier, carbon black powder may be mentioned.

As the polymer having ion exchange groups, a fluorinated polymer having ion exchange groups may be mentioned, and it is also preferred to use the above-mentioned polymer (I).

The mass of a metal catalyst per 1 cm² of a catalyst layer is preferably at least 0.05 mg/cm², more preferably 0.2 mg/cm², and preferably at most 4 mg/cm², more preferably at most 2 mg/cm², further preferably at most 1 mg/cm².

The mass ratio of the catalyst to the polymer having ion exchange groups in a catalyst layer (the mass of the catalyst / the mass of the polymer having ion exchange groups) is preferably from 2 to 6.

A gas diffusion layer serves to rapidly diffuse the gas generated in a catalyst layer out of the catalyst layer and also serves as a current collector. As a gas diffusion layer, carbon paper, carbon cloth, carbon felt, a sintered product of titanium fiber or a sintered product of titanium particles may, for example, be mentioned. It is preferred to use a sintered product of titanium fiber or a sintered product of titanium particles on the anode side because a carbon material would oxidize on the anode side where the electrical potential is high. A sintered product of titanium may be plated with platinum or the like, if necessary.

The cathode gas diffusion layer may have a water-repellent finish of PTFE.

Although the membrane-electrode assemblies shown in Fig. 1 and Fig. 2 comprise gas diffusion layers 28, gas diffusion layers are optional, and hence the membrane electrode assembly may comprise no gas diffusion layers.

It is preferred that the anode and the cathode each have a thickness of at least 5 µm, and at most 100 µm, more preferably at most 50 µm, further preferably at most 30 µm, particularly preferably at most 15 µm, independently of each other, to enhance the effect of the present invention.

The thickness of the anode or the cathode is measured on a cross-sectional image of a membrane electrode assembly cut along the thickness direction under a laser microscope, and the arithmetical mean is calculated from measurements at arbitrary 20 points.

### <Production of Membrane Electrode Assembly>

A membrane electrode assembly may be produced, for example, by bonding a laminate comprising an anode catalyst layer and a release liner (such as a ETFE sheet) and a laminate comprising a cathode catalyst layer and a release liner (such as a ETFE sheet) to both sides of an electrolyte membrane and releasing the release liners.

The laminates may have a gas diffusion layer each between the catalyst layer and the release liner so that the gas diffusion layer is arranged on the side of the electrolyte membrane opposite to the catalyst layer.

The catalyst layers may be formed by applying a catalyst layer ink to the surface to be coated (such as the surface of release liners), followed by drying, if necessary. The catalyst layer ink is a dispersion of a polymer having ion exchange groups and a catalyst in a dispersion medium.

### <Applications>

The membrane electrode assembly of the present invention is used in a polymer electrolyte membrane water electrolyzer.

### [Water Electrolyzer]

The water electrolyzer of the present invention comprises the above-mentioned membrane electrode assembly. Owing to the membrane electrode assembly, the water electrolyzer of the present invention can achieve a low electrolysis voltage with low hydrogen crossover.

The water electrolyzer of the present invention has the same structure as conventional water electrolyzers except that it comprises the above-mentioned membrane electrode assembly.

### EXAMPLES

Now, the present invention will be described in further detail with reference to Examples. Examples 1-1 to 1-5 and Examples 2-1 to 2-2 are preparation Examples, Examples 3-1 to 3-10 are working Examples, and Examples 4-1 to 4-3 are comparative Examples. It should be understood that the present invention is by no means restricted thereto.

In the Examples, first electrolyte layers mean electrolyte layers comprising a fluorinated polymer and a platinum-containing substance, and second electrolyte layers mean electrolyte layers comprising a fluorinated polymer and no platinum-containing substance.

### [Ion Exchange Capacity of Fluorinated Polymer]

The weight of a fluorinated polymer was measured after 24 hours of incubation in a glove box purged with dry nitrogen, as the dry mass of the fluorinated polymer. Then, the fluorinated polymer was soaked in 2 mol/L aqueous sodium chloride at 60°C for 1 hour. The fluorinated polymer was washed with ultrapure water and recovered, and the solution in which the fluorinated polymer had been soaked was titrated with 0.1 mol/L aqueous sodium hydroxide to determine the ion exchange capacity of the fluorinated polymer (meq/g dry resin).

In the tables appearing later, IEC (meq/g) means ion exchange capacity (meq/g dry resin).

### [Average Particle Size (D50) of Platinum-Containing Substance]

The particle size distribution of a dispersion of a platinum-containing substance and a fluorinated polymer was measured with a laser diffraction particle size analyzer (MT3300EXII-SDC, manufactured by MicrotracBEL Corp.) after grinding (in a bead mill) to obtain the volume-based cumulative 50% particle size of the platinum-containing substance. As D50, three measurements of cumulative 50% particle size were arithmetically averaged.

### [Thickness of Electrolyte Layer]

The thickness of an electrolyte layer was measured on a magnified cross-sectional image of the electrolyte layer (at an objective lens magnification of 50) taken by a laser microscope (model "VK-X1000", manufactured by KEYENCE CORPORATION).

### [Maximum Depth of Platinum-Containing Substance in Polymer Electrolyte Membrane from Anode Side]

The "maximum depth of a platinum-containing substance in a polymer electrolyte membrane from the anode side" means the percentage (%) of the distance from the anode side of the electrolyte membrane within which the platinum-containing substance is present (the distance Tₓ in Fig. 3), to the thickness of the polymer electrolyte membrane (the distance T₁ in Fig. 3).

The maximum depth was calculated by detecting where the platinum-containing substance was present in the electrolyte membrane, using a magnified cross-sectional image of a membrane electrode assembly along the thickness direction, taken by a scanning electron microscope (model "SU8230", manufactured by Hitachi High-Technologies Corporation) and an elemental distribution measured by an energy-dispersive X ray spectrometer (model "QUANTAX FlatQUAD", manufactured by Bruker) then measuring the distance Tₓ in Fig. 3, and calculating the maximum depth from the distance Tₓ and the thickness of the polymer electrolyte membrane (the distance T₁ in Fig. 3).

### [Platinum Atom Content in Polymer Electrolyte Membrane Analyzed from Anode Side by X ray Spectrometry]

The content of platinum atom (mg/cm²) was measured with an X-ray fluorescence spectrometer ("Supermini 200", manufactured by Rigaku Corporation) by irradiating the anode side of a polymer electrolyte membrane. The measurements were made on a circular area having a diameter of 30 mm on the membrane, quantitatively based on a preliminarily prepared calibration curve.

### [Electrolysis Voltage]

A membrane electrode assembly was sandwiched between sintered products of titanium fiber (manufactured by Bekaert) having a 0.25-mm thickness and a 60% porosity so that the electrode area would be under a pressure of 1.5 MPa and mounted in a single cell having an electrode area of 16 cm² with platinum-coated titanium plates having straight channels as separators and evaluated.

Next, pure water at 60°C and ordinary pressure with an electrical conductivity of at most 1.0 µS/cm was supplied to both the anode and cathode compartments to fully hydrate the polymer electrolyte membrane and the ionomers in the electrodes at a flow rate of 50 mL/min for 8 hours. Then, water electrolysis was carried out by supplying pure water at 60°C with electrical conductivity of at most 1.0 µS/cm to the anode compartment at a flow rate of 50 mL/min with back pressures on the anode side and on the cathode side kept at ordinary pressure, while the electric current was kept at 16 A (current density 1 A/cm²) during 4 hours of preliminary run and then increased from 0 A to 32 A (current density from 0 A/cm² to 2 A/cm²) stepwise by 2 A at intervals of 5 minutes for measurement of electrolysis voltage under current control by a high current potentio/garvanostat HCP-803 (manufactured by BioLogic). The electrolysis voltage at 32 A (current density 2 A/cm²) was rated on the following scale.

| | |
|---|---|
| A: | 1.70 V or below |
| F: | Over 1.70 V |

### [Hydrogen Concentration in Oxygen]

After the measurement of electrolysis voltage, electrolysis was continued at 3.2 A (current density 0.2 A/cm²) for 12 hours by supplying pure water at 60°C with electrical conductivity of at most 1.0 µS/cm to the anode compartment at a flow rate of 50 mL/min with back pressures on the anode side and on the cathode side kept at ordinary pressure under current control by a high current potentio/garvanostat HCP-803 (manufactured by BioLogic). After 12 hours, the gas discharged from the anode compartment was dehydrated, and the hydrogen concentration in the gas was measured with a Micro GC (Agilent 490, manufactured by Agilent Technologies, Inc.), and the hydrogen concentration in oxygen (H₂ concentration in O₂) rated on the following scale.
A: below 0.05 vol%
B: over 0.05 vol% and below 0.1 vol%
C: over 0.1 vol% and below 0.5 vol%
F: over 0.5 vol%

### {Abbreviations}

TFE: tetrafluoroethylene
PSVE: CF₂=CFOCF₂CF(CF₃)OCF₂CF₂SO₂F
P2SVE: monomer represented by the following formula m32-1

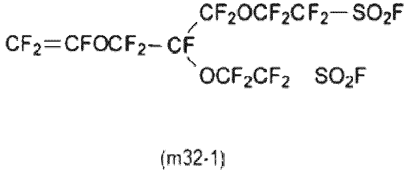

### [Preparation of Dispersion of Platinum / Electrolyte Polymer]

### <EXAMPLE 1-1>

A fluorinated polymer in acid form obtained by copolymerization of TFE and PSVE followed by hydrolysis and acid treatment (ion exchange capacity: 1.25 meq/g dry resin) was dispersed in a solvent comprising water/ethanol in a ratio of 40/60 (mass%) to obtain a dispersion having a solid content of 20.0% (hereinafter referred to as "Dispersion X"). To Dispersion X (1.75 g), ethanol (4.00 g) and water (6.70 g) and then a platinum-loaded carbon catalyst containing 45.6 mass% platinum ("TEC10E50E" manufactured by TANAKA Kikinzoku Kogyo K.K., a platinum-containing substance comprising platinum and a carbon support) (1.30 g) were added. The resulting mixture was ground with 150 g of beads having a diameter of 5 mm in a planetary bead mill (rotational speed 300 rpm) for 30 minutes and further ground with water (4.87g) and Dispersion X (113.65g) in the planetary bead mill (rotational speed 200 rpm)for 60 minutes to obtain Dispersion D-1 of a platinum-containing substance and a fluorinated polymer with a solid content of 18.4 mass%.

### <EXAMPLE 1-2 AND EXAMPLE 1-3>

The procedure in Example 1-1 was followed except that the ratio of platinum to the fluorinated polymer in the dispersion was changed as shown in Table 1 to obtain Dispersions D-2 and D-3 of a platinum-containing substance and a fluorinated polymer.

### < EXAMPLE 1-4>

A fluorinated polymer in acid form obtained by copolymerization of TFE and P2SVE followed by hydrolysis and acid treatment (ion exchange capacity: 1.95 meq/g dry resin) was dispersed in a solvent comprising water and propanol in a ratio of 30/70 (mass%) to obtain a dispersion having a solid content of 13.0% (hereinafter referred to as "Dispersion Z"). To the dispersion (2.72 g), ethanol (5.24 g), water (7.27 g) and then a platinum-loaded carbon catalyst containing 45.6 mass% platinum ("TEC10E50E" manufactured by TANAKA Kikinzoku Kogyo K.K., a catalyst comprising platinum as a platinum-containing substance supported on a carbon support) (1.30 g) were added. The resulting mixture was ground with 150 g of beads having a diameter of 5 mm in a planetary bead mill (rotational speed 300 rpm) for 30 minutes and further ground with water (3.39 g), ethanol (73.81 g) and the dispersion (356.05 g) in the planetary bead mill (rotational speed 200 rpm)for 60 minutes to obtain Dispersion D-4 of a platinum-containing substance and a fluorinated polymer with a solid content of 10.0 mass%.

### <EXAMPLE 1-5 >

The procedure in Example 1-1 was followed except that platinum powder having a platinum content of 96.5% and a specific surface of 50 m²/g (manufactured by TANAKA Kikinzoku Kogyo K.K.) was used as the platinum-containing substance, and the ratio of platinum to the fluorinated polymer was changed as shown in Table 1 to obtain Dispersion D-5 of a platinum-containing substance and a fluorinated polymer.

### <EXAMPLE 2-1>

The procedure in Example 1-1 was followed except that a commercially available dispersion of fluorinated polymer, Nafion (D2020) (manufacture by The Chemours Company, ion exchange capacity: 1.0 meq/g dry resin), was used, and the ratio of platinum to the fluorinated polymer was changed as shown in Table 1 to obtain Dispersion D'-1 of a platinum-containing substance and a fluorinated polymer.

### <EXAMPLE 2-2>

The procedure in Example 1-1 was followed except that a dispersion of an fluorinated polymer in acid form obtained by copolymerization of TFE and PSVE followed by hydrolysis and acid treatment (ion exchange capacity: 1.10 meq/g dry resin) in a solvent comprising water/ethanol in a ratio of 40/60 (mass%) with a solid content of 26.0% (hereinafter referred to as "Dispersion Y") was used as a dispersion of a fluorinated polymer, and the ratio of platinum to the fluorinated polymer was changed as shown in Table 1 to obtain Dispersion D'-2 of a platinum-containing substance and a fluorinated polymer.

**[Table 1]**

| | Ex. 1-1 | Ex. 1-2 | Ex. 1-3 | Ex. 1-4 | Ex. 1-5 | Ex. 2-1 | Ex. 2-2 |
|---|---|---|---|---|---|---|---|
| Dispersion | D-1 | D-2 | D-3 | D-4 | D-5 | D'-1 | D'-2 |
| Fluorinated polymer | TFE/PSVE | TFE/PSVE | TFE/PSVE | TFE/P2SVE | TFE/PSVE | TFE/PSVE | TFE/PSVE |
| IEC (meq/g) | 1.25 | 1.25 | 1.25 | 1.90 | 1.25 | 1.00 | 1.10 |
| Platinum-containing substance | Pt | Pt | Pt | Pt | Pt | Pt | Pt |
| Support | carbon | carbon | carbon | carbon | - | carbon | carbon |
| Content of platinum-containing substance in catalyst (mass%) | 45.6% | 45.6% | 45.6% | 45.6% | 96.5% | 45.6% | 45.6% |
| Platinum-containing substance / fluorinated polymer (mass ratio) | 0.0257 | 0.0130 | 0.0065 | 0.0130 | 0.0153 | 0.0257 | 0.0257 |
| D50 (µm) | 2.89 | 1.57 | 0.897 | 1.57 | 3.927 | 2.89 | 2.89 |

### <Example 3-1>

### (Formation of Polymer Electrolyte Membrane)

Dispersion D-1 was applied onto an ETFE sheet with an applicator so that the dry coting thickness would be 10 µm, dried at 80°C for 10 minutes and then heated at 150°C for 15 minutes to obtain a first electrolyte layer.

Dispersion X was applied onto an ethylene-tetrafluoroethylene copolymer (ETFE) sheet having a thickness of 100 µm with a die coater, dried at 80°C for 15 minutes and heated at 160°C for 30 minutes to obtain a second electrolyte layer. The amount of the liquid composition to be applied was adjusted so that the dry thickness of the second electrolyte layer would be 100 µm.

The first electrolyte layer and the second electrolyte layer were laminated by hot pressing at 150°C at 1.5 MPa for 2 minutes, taken out of the pressing machine and heated at 150°C for 30 minutes in an oven to obtain a polymer electrolyte membrane.

### (Preparation of Anode Catalyst Layer Decal)

Dispersion Y (33.0 g) was mixed with ethanol (18.06 g) and ZEORORA H (10.58 g) (manufactured by ZEON CORPORATION) in a planetary centrifugal mixer (THINKY MIXER, manufactured by THINKY CORPORATION) at 2200 rpm for 5 minutes. The resulting composition (54.06 g) was mixed with ethanol (46.44 g) and water (75.75 g), further with a iridium oxide catalyst (40.0 g) having an iridium content of 74.8 mass% and a specific surface of 100 m²/g (manufactured by TANAKA Kikinzoku Kogyo K.K.). The resulting mixture was ground in a planetary bead mill (rotational speed 300 rpm) for 90 minutes to obtain an anode catalyst ink having a solid content of 22 mass%.

The anode catalyst ink was applied onto an ETFE sheet with an applicator so that the iridium content would be 1.0 mg/cm², dried at 80°C for 10 minutes and heated at 150°C for 15 hours to obtain an anode catalyst layer decal.

### (Preparation of Cathode Catalyst Layer Decal)

A platinum-loaded carbon powder catalyst having a platinum content of 46 mass% (11 g) ("TEC10E50E", manufactured by TANAKA Kikinzoku Kogyo K.K.) was mixed with water (59.4 g) and ethanol (39.6 g) in an ultrasonic homogenizer to obtain a catalyst dispersion.

The catalyst dispersion was mixed with a mixture (29.2 g) preliminarily obtained by kneading Dispersion Y (20.1 g), ethanol (11 g) and ZEORORA H (6.3 g) (manufactured by ZEON CORPORATION), and then further mixed with water (3.66 g) and ethanol (7.63 g) with a paint conditioner for 60 minutes to obtain a cathode catalyst ink having a solid content of 10.0 mass%.

The cathode catalyst ink was applied onto an ETFE sheet with a die coater, dried at 80°C and heated at 150°C for 15 hours to obtain a cathode catalyst layer decal having a platinum content of 0.4 mg/cm².

### (Preparation of Membrane Electrode Assembly)

The anode catalyst layer, the solid electrolyte membrane 1 and the cathode catalyst layer were bonded by hot pressing at a pressing temperature of 150°C at a pressure of 3 MPa for 10 minutes so that the first electrolyte layer in the solid electrolyte membrane would face the catalyst layer in the anode catalyst decal, and the other side of the solid electrolyte membrane would face the catalyst layer in the cathode catalyst decal, and after cooling to 70°C and removal of the pressure, the resulting laminate was taken out. The ETFE sheets in the anode catalyst layer decal and the cathode catalyst layer decal were peeled off to obtain a membrane electrode assembly having an electrode area of 16 cm². The membrane electrode assembly was evaluated by measuring the electrolysis voltage and hydrogen concentration in oxygen. The results are shown in Table 2.

### <EXAMPLE 3-2 AND EXAMPLE 3-3>

Membrane electrode assemblies were prepared in the same manner as in Example 3-1 except that Dispersion D-2 or D3 was used for formation of the first electrolyte layer, instead of Dispersion D-1. The results of their evaluation are shown in Table 2.

### <EXAMPLE 3-4>

A membrane electrode assembly was prepared in the same manner as in Example 3-1 except that Dispersion D-4 was used for formation of the first electrolyte layer, instead of Dispersion D-1, and Dispersion Z was used for formation of the electrolyte layer, and the thickness of the electrolyte layer was changed to 50 µm. The results of its evaluation are shown in Table 2.

### <EXAMPLE 3-5>

A membrane electrode assembly was prepared in the same manner as in Example 3-2 except that the electrolyte membrane described in Example 1 of WO2020/162511 was used as the second electrolyte layer. The results of its evaluation are shown in Table 2.

### <EXAMPLE 3-6>

Dispersion D-2 was applied onto an ETFE sheet so that the dry coating thickness would be 100 µm, dried at 80°C for 10 minutes and heated at 150°C for 15 minutes to obtain a first electrolyte layer. A membrane electrode assembly was prepared in the same manner as in Example 3-2 except that the first electrolyte layer was used alone as the polymer electrolyte membrane. The results of its evaluation are shown in Table 2.

### <EXAMPLE 3-7>

A second electrolyte layer prepared as described in Example 3-1 was immersed in ultrapure water for 16 hours, then in 0.1 N aqueous sodium hydroxide for 30 minutes, then washed with ultrapure water, and further immersed in 0.1 N aqueous sodium hydroxide for 1 hour. The electrolyte layer was taken out, washed with ultrapure water, immersed in 3 mM aqueous tetraamineplatinum (II) chloride for 2 minutes and washed with ultrapure water. Then, the electrolyte layer was immersed in 0.1 N aqueous sodium hydroxide containing 1 mass% sodium borohydride for 3 hours to deposit platinum fine particles in the electrolyte layer. The electrolyte layer was washed with ultrapure water, a cycle of 30-minute immersion in 3 N hydrogen chloride at 80°C and 30-minute immersion in ultrapure water at 80°C was repeated 8 times. Then, the electrolyte layer was immersed in ultrapure water at 80°C for 30 minutes three times and air-dried to obtain a first electrolyte layer. A membrane electrode assembly was prepared in the same manner as in Example 3-1 except that the first electrolyte layer was used as the polymer electrolyte membrane. The results of its evaluation are shown in Table 2.

### <EXAMPLE 3-8>

A membrane electrode assembly was prepared in the same manner as in Example 3-1 except that Dispersion D-5 was used for formation of the first electrolyte layer instead of Dispersion D-1. The results of its evaluation are shown in Table 2.

### <EXAMPLE 3-9>

A membrane electrode assembly was prepared in the same manner as in Example 3-1 except that the first electrolyte layer was sandwiched between two second electrolyte layers formed from Dispersion X having a thickness of 50 µm, then hot-pressed at 150°C at 1.5 MPa for 2 minutes and taken out of the pressing machine. The resulting laminate was heated at 150°C for 30 minutes in an oven to obtain a polymer electrolyte membrane. The polymer electrolyte membrane is the same on both sides and does not need care about which side of the membrane should be bonded to the anode or cathode catalyst layer. The results of its evaluation are shown in Table 2.

### <EXAMPLE 3-10>

A membrane electrode assembly was prepared in the same manner as in Example 3-1 except that the first electrolyte layer in the polymer electrolyte membrane faced the catalyst layer in the cathode catalyst layer decal, and the other side of the polymer electrolyte membrane faced the catalyst layer in the anode catalyst layer decal. The results of its evaluation are shown in Table 2.

### <EXAMPLE 4-1>

A membrane electrode assembly was prepared in the same manner as in Example 3-1 except that Dispersion D'-1 was used for formation of the first electrolyte layer instead of Dispersion D-1, and a commercial membrane, Nafion 115 (manufactured by The Chemours Company) was used as the second electrolyte layer. The results of its evaluation are shown in Table 2.

### <EXAMPLE 4-2>

A membrane electrode assembly was prepared in the same manner as in Example 3-1 except that Dispersion D'-2 was used for formation of the first electrolyte layer instead of Dispersion D-1, and Dispersion Y was used for formation of the second electrolyte layer. The results of its evaluation are shown in Table 2.

### <EXAMPLE 4-3>

A membrane electrode assembly was prepared in the same manner as in Example 3-1 except that the polymer electrolyte comprised the second electrolyte layer only without the first electrolyte layer. The results of its evaluation are shown in Table 2.

**[Table 2]**

| | Ex. 3-1 | Ex. 3-2 | Ex. 3-3 | Ex. 3-4 | Ex. 3-5 | Ex. 3-6 | Ex. 3-7 | Ex. 3-8 | Ex. 3-9 | Ex. 3-10 | Ex. 4-1 | Ex. 4-2 | Ex. 4-3 |
|---|---|---|---|---|---|---|---|---|---|---|---|---|---|
| Dispersion used for formation of 1 st electrolyte layer | D-1 | D-2 | D-3 | D-4 | D-2 | D-2 | - | D-5 | D-1 | D-1 | D'-1 | D'-1 | - |
| Thickness of 1st electrolyte layer (µm) | 10 | 10 | 10 | 10 | 10 | 100 | 100 | 10 | 10 | 10 | 10 | 10 | - |
| Content of platinum-containing substane in 1 st electrolyte layer (mg/cm²) | 0.036 | 0.015 | 0.0075 | 0.015 | 0.015 | 0.015 | 0.021 | 0.018 | 0.036 | 0.036 | 0.036 | 0.036 | - |
| Fluorinated polymer in 2nd electrolyte layer | TFE/PSVE | TFE/PSVE | TFE/PSVE | TFE/P2SVE | TFE/PSVE | - | - | TFE/PSVE | TFE/PSVE | TFE/PSVE | TFE/PSVE | TFE/PSVE | TFE/PSVE |
| IEC of fluorinated polymer in 2nd electrolyte layer (meq/g) | 1.25 | 1.25 | 1.25 | 1.90 | 1.25 | - | - | 1.25 | 1.25 | 1.25 | 1.00 | 1.10 | 1.25 |
| Thickness of 2nd electrolyte layer (µm) | 100 | 100 | 100 | 50 | 90 | - | - | 100 | 50 (per layer | 100 | 127 | 100 | 100 |
| Reinforcing material in 2nd electrolyte layer | absent | absent | absent | absent | present | - | - | absent | absent | absent | absent | absent | absent |
| Position of 1 st electrolyte layer | anode side | anode side | anode side | anode side | anode side | anode side | anode side | anode side | middle of membrane | cathode side | anode side | anode side | - |
| Maximum depth of platinum-containing substance from anode side of polymer electrolyte membrane | 9% | 9% | 9% | 17% | 10% | 100% | 100% | 9% | 55% | 100% | 7% | 7% | - |
| Platinum atom content measured by X ray irradiation of anode side of polymer electrolyte membrane (mg/cm²) | 0.036 | 0.015 | 0.0075 | 0.015 | 0.015 | 0.015 | 0.021 | 0.018 | 0.036 | 0.022 | 0.036 | 0.036 | 0 |
| Electrolysis voltage (V) | B | B | B | B | B | B | B | B | B | B | F | F | B |
| H₂ concentration in O₂ (vol%) | A | A | B | A | A | C | C | C | C | C | A | A | F |

As shown in Table 2, it is confirmed that in a membrane electrode assembly for polymer electrolyte membrane water electrolysis comprising an anode and a cathode each having a catalyst layer and a polymer electrolyte membrane sandwiched between the anode and cathode, when the polymer electrolyte membrane comprises a fluorinated polymer having an ion exchange capacity of from 1.25 to 2.00 meq/g dry resin and a platinum-containing substance, it is possible to achieve a low hydrolysis voltage with low hydrogen crossover (as in Examples 3-1 to Example 3-10).

### REFERENCE SYMBOLS

- 10, 100: Electrolyte membrane
- 20, 120: Membrane electrode assembly
- 22: Anode
- 24: Cathode
- 26: Catalyst layer
- 28: Gas diffusion layer
- 100A: First electrolyte layer
- 100B: Second electrolyte layer
- 112: Platinum-containing substance
- S₀, S_{X}, S₁: Surfaces
- T_{X}, T₁: Distances

The entire disclosure of Japanese Patent Application No. 2021-107925 filed on June 29, 2021 including specification, claims, drawings and summary is incorporated herein by reference in its entirety.

## Claims

1. A membrane electrode assembly for polymer electrolyte membrane water electrolysis which comprises a polymer electrolyte membrane, an anode having a catalyst layer provided on one side of the polymer electrolyte membrane, a cathode having a catalyst layer provided on the other side of the polymer electrolyte membrane, wherein the polymer electrolyte membrane comprises a fluorinated polymer having ion exchange groups and an ion exchange capacity of from 1.25 to 2.00 meq/g dry resin and a platinum-containing substance.

2. The membrane electrode assembly for polymer electrolyte membrane water electrolysis according to Claim 1, wherein the platinum-containing substance in the polymer electrolyte membrane is present only within a distance of 20% of the thickness of the polymer electrolyte membrane from the anode side of the polymer electrolyte membrane.

3. The membrane electrode assembly for polymer electrolyte membrane water electrolysis according to Claim 2, wherein the content of platinum atoms measured by X ray fluorescence spectrometry from the anode side of the polymer electrolyte membrane is from 0.005 to 0.050 mg/cm².

4. The membrane electrode assembly for polymer electrolyte membrane water electrolysis according to any one of Claim 1 to 3, wherein the platinum-containing substance is supported on a support.

5. The membrane electrode assembly for polymer electrolyte membrane water electrolysis according to any one of Claim 1 to 4, wherein the polymer electrolyte membrane further comprises a reinforcing material.

6. The membrane electrode assembly for polymer electrolyte membrane water electrolysis according to any one of Claim 1 to 5, wherein the fluorinated polymer comprises at least one species of units selected from the group consisting of units represented by the formula (1-3) and units represented by the formula (1-4): 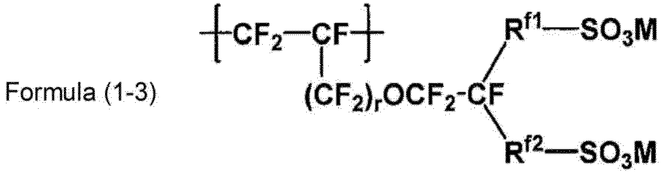 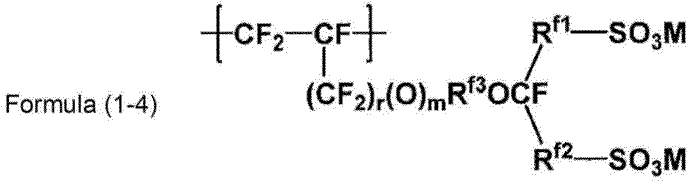 wherein in the formula (1-3) and the formula (1-4), R^{f1} is a perfluoroalkylene group which may have an oxygen atom between carbon atoms, R^{f2} is a single bond or a perfluoroalkylene group which may have an oxygen atom between carbon atoms, R^{f3} is a single bond or a perfluoroalkylene group which may have an oxygen atom between carbon atoms, r is 0 or 1, m is 0 or 1, and M is a hydrogen atom, an alkali metal or a quaternary ammonium cation.

7. The membrane electrode assembly for polymer electrolyte membrane water electrolysis according to any one of Claim 1 to 6, wherein the polymer electrolyte membrane has a multilayer structure comprising two or more electrolyte layers, and at least one of the electrolyte layers comprises the fluorinated polymer and the platinum-containing substance.

8. The membrane electrode assembly for polymer electrolyte membrane water electrolysis according to Claim 7, wherein all the electrolyte layers comprise the platinum-containing substance, and the content of the platinum-containing substance in an electrolyte layer close to the anode is higher than the platinum-containing substance in another electrolyte layer close to the cathode.

9. The membrane electrode assembly for polymer electrolyte membrane water electrolysis according to Claim 7 or 8, wherein the electrolyte layers have different ion exchange capacities.

10. The membrane electrode assembly for polymer electrolyte membrane water electrolysis according to Claim 7 or 9, wherein the electrolyte layers comprise an electrolyte layer which does not comprise the platinum-containing substance and an electrolyte layer which comprises the platinum-containing substance, and the ratio of the thickness of the electrolyte layer which comprises the platinum-containing substance to the thickness of the electrolyte layer which does not comprise the platinum-containing substance is at least 0.02 and at most 0.50.

11. The membrane electrode assembly for polymer electrolyte membrane water electrolysis according to any one of Claim 1 to 10, wherein the polymer electrolyte membrane has a thickness of at least 30 µm and at most 400 µm.

12. The membrane electrode assembly for polymer electrolyte membrane water electrolysis according to any one of Claim 1 to 11, wherein the mass ratio of the platinum-containing substance to the fluorinated polymer in the polymer electrolyte membrane is at least 0.005 and at most 0.030.

13. A water electrolyzer comprising the membrane electrode assembly for polymer electrolyte membrane water electrolysis as defined in any one of Claim 1 to 12.
